# EUROPEAN PATENT APPLICATION

(11) **EP 4 668 105 A1**
(43) Date of publication of application: **24.12.2025**
(21) Application number: 24183696.4
(22) Date of filing: 21.06.2024
(51) Int. Cl.: G06F 8/654, G06F 9/4401, G06F 21/57

(54) **METHODS AND DEVICES FOR SAFE FIRMWARE LOADER UPDATE**

(71) Applicant: Diebold Nixdorf Systems GmbH, 33106 Paderborn (DE)
(72) Inventor: TISLJARIC, Toni, 33106 Paderborn (DE)
(74) Representative: Viering, Jentschura & Partner mbB Patent- und Rechtsanwälte

(57) **Abstract**

A microcontroller device including: a non-volatile memory including: a restricted memory area configured to store a first bootloader software to load a firmware; and a further memory area configured to store a loader update software and a second bootloader software; a logic configured to: identify, before an execution of the first bootloader software, the second bootloader software within the further memory area; and execute the loader update software to overwrite the second bootloader software into the restricted memory area.

## Description

### Technical Field

This disclosure relates to a microcontroller device, in particular a microcontroller device and its functional blocks to provide a firmware update.

### Background

A bootloader is a low-level software program (e.g. firmware) that runs on a microcontroller during the initial boot sequence. The bootloader may be considered serving as the foundational software component that may be configured to initialize the system, configure designated peripherals, which may be essential for the microcontroller and/or the device including the microcontroller, and establish an environment for the execution of the main application software (e.g. main application firmware). In some examples, the bootloaders may implement secure boot mechanisms, such as cryptographic verification and digital signatures, to ensure that only authenticated and unmodified code is loaded and executed on the microcontroller.

Traditionally, a bootloader may be used to update a firmware that may run on a microcontroller, such as the main application firmware. The main application may be stored within a memory area and the memory area storing the main application firmware may be critical such that the write access to the area is restricted in an effort to prevent corruption of the main application firmware. However, this restriction may also hinder updates or changes (e.g. potential rolling fixes) for the main application firmware in cases errors are found during the product life cycle.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1A illustrates a computing device 100 in accordance with various aspects of described herein;
FIG. 1B shows an illustrative example of a microcontroller device in accordance with various aspects provided herein;
FIG.2 shows an example of a microcontroller device in accordance with various aspects provided herein;
FIG. 3 shows an illustrative example of a memory in three- time instances in accordance with various aspects described herein;
FIG. 4 illustrates a method in accordance with various aspects disclosed herein;
FIG. 5 depicts a flow diagram in accordance with various aspects disclosed herein.

### Description

The following detailed description refers to the accompanying drawings that show, by way of illustration, exemplary details, and aspects in which aspects of the present disclosure may be practiced. Aspects described herein are not necessarily mutually exclusive, as some aspects may be combined with other aspects to form further aspects. Various aspects may have been described in accordance with aspects associated with methods and various aspects may have been described in accordance with aspects associated with devices, but this should not be taken as limiting as the aspects described in accordance with methods apply to devices, and vice versa. Throughout the drawings, it should be noted that like reference numbers may be used structured similarly to depict the same or similar elements, features, and structures.

A microcontroller may refer to an integrated circuit that combines a processor and a memory, and possibly various designated input and/or output (I/O) peripherals on a single chip. A microcontroller may be considered as a small, self-contained computer configured to perform specific control and automation tasks within an embedded system or a device.

An embedded microcontroller may refer to a microcontroller integrated into a larger system or a device, for the purpose of performing designated tasks, such as control and automation tasks. Unlike general-purpose microprocessors, an embedded microcontroller may be configured in a manner that it is dedicated to a particular application or set of functions within an embedded system. An embedded microcontroller may be tightly coupled with the hardware and software components of the system they are embedded in. Illustratively, an embedded controller may be configured for controlling and coordinating various peripherals, sensors, and actuators. Embedded microcontrollers may be programmed with the firmware stored in a non-volatile memory, such as flash memory, to provide low-level control and instructions for operation of the system and/or device including the embedded controller. The processor of the embedded microcontroller may execute the firmware and interact with the various input/output (I/O) peripherals to receive input data, process the data, and generate appropriate output signals or actions.

A microcontroller (e.g. an embedded microcontroller) may incorporate a bootloader firmware configured to initialize the operation of the microcontroller and/or the system and/or device including the microcontroller and load the main application firmware into memory. Traditionally, the bootloader firmware may be stored in a dedicated memory region, separate from the main application firmware area, and may be executed during the boot process or upon a specific trigger event. The bootloader firmware may provide a trusted and isolated execution environment separate from the main application firmware

The bootloader firmware may further be configured to facilitate updates to the main application firmware. In some examples, the bootloader firmware may handle the process of receiving new firmware images through various communication interfaces (e.g., universal asynchronous receiver-transmitter (UART), universal serial bus (USB), network), verifying the integrity of the received firmware using techniques like checksums or digital signatures, and programming the validated images into the appropriate non-volatile memory regions. Bootloaders may also implement recovery mechanisms to handle failed or interrupted updates, ensuring the microcontroller and/or the system and/or the device including the microcontroller can revert to a known operational state if necessary.

One potential issue that may arise during the update process of a bootloader software is power loss. If the power supply to the microcontroller device is interrupted during the critical stages of updating the bootloader software, such interruption may result in a corrupted or incomplete update, which may render the bootloader inoperable. A corrupted or incomplete update of the bootloader software may potentially brick the device, leaving it in an unrecoverable state and unable to boot or load any firmware. Traditionally, mechanisms used to update bootloaders may implement robust power management operations to mitigate the above-mentioned risk, such as use of capacitive power backups or implementing checkpoints and rollback mechanisms, so that the integrity of the update process in the event of an unexpected power loss is ensured. However, such mechanisms may increase the complexity of the update process, consume additional hardware resources, and potentially introduce new failure modes or points of vulnerability.

In some examples, the microcontroller may employ a secondary or backup bootloader to provide an additional layer of protection and recovery capabilities. In some cases, the secondary bootloader may be provided in a separate, protected memory region and may serve as a failsafe mechanism in case the primary bootloader becomes corrupted or inaccessible. However, the implementation of a secondary bootloader may introduce additional complexity, memory overhead, and potential security considerations associated with the introduction of further attack possibilities that must be secured. Furthermore, managing and maintaining multiple bootloader instances can increase the overall system complexity and may introduce compatibility issues or conflicts between the primary and secondary bootloaders.

Furthermore, it is to be considered that the process of updating a bootloader software may be dependent on the specific hardware platform and the memory architecture of the microcontroller device. Different microcontroller families or models may have varying memory layouts, addressing schemes, and peripheral interfaces, which may influence the bootloader update process. Such hardware dependency may introduce various challenges against the development of a universal bootloader update solution that may be compatible across multiple hardware platforms. Manufacturers may need to provide platform-specific update tools, documentation, and guidelines to ensure that the bootloader update process is correctly implemented and tailored to the target hardware. However, this approach may result in to increased development and maintenance efforts, as well as potential compatibility issues or fragmentation across different hardware platforms.

In some cases, the existing firmware configured to run on a microcontroller device may impose certain restrictions or limitations with respect to the update of the bootloader software. For example, certain firmware applications may implement security measures, such as write-protection mechanisms or access control policies, which may be configured to prevent unauthorized modifications to designated memory areas, including the memory area configured to store the bootloader software. Such restrictions may be implemented to enhance the security and integrity of the system, but they may also hinder the bootloader update process. In such scenarios, the microcontroller device may implement certain procedures or unlock mechanisms to temporarily bypass these restrictions during the bootloader update process, while maintaining the overall security posture of the system. However, introducing unlock mechanisms or bypassing security measures, may introduce new vulnerabilities or attack vectors if not implemented with utmost care and rigorous security measures. Furthermore, managing and maintaining these unlock mechanisms across different firmware versions and hardware platforms may add significant complexity and overhead to the bootloader update process.

In accordance with various aspects described herein, a bootloader update mechanism is provided as a means to update a normally restricted bootloader section in embedded systems, in some cases without tampering with existing write access restrictions. In some examples, the bootloader update mechanism may remain unaffected by power loss. Correspondingly, aspects have been provided to protect the microcontroller and/or the system or the device including the microcontroller may be protected during an update of the bootloader of the microcontroller, while also addressing one or some of the above-mentioned issues.

In accordance with various aspects provided herein, the microcontroller may identify, before an execution of a current bootloader software to initialize the microcontroller, a new bootloader software within a memory area and execute instructions to overwrite the new bootloader software onto the current bootloader software. In some examples, the new bootloader software may be provided in within a firmware application that incorporates the new bootloader software as part of its binary. Should the microcontroller does not identify the new bootloader software, the microcontroller may cause the current bootloader software to be executed.

The term "software" refers to any type of executable instruction, including firmware. In the context of this application, the term "software" may encompass the firmware, as well as a program, an application, or an operating system that may operate as higher-level software, and may run on a corresponding firmware and/or a corresponding hardware.

The term "firmware" may refer to a specific type of software that may be considered to as lower-layer software. Generally, the firmware may be highly dependent on, tailored to, and/or optimized for a specific hardware platform that runs the firmware.

The term "memory area" may refer to a specific region or partition of a memory space of a memory, and may be used for storing data or code. A memory area may refer to a particular use of a memory defining the memory area as a whole memory (e.g. the memory space of the memory), and/or physical and/or logical divisions or segments of a memory space.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa.

The term "processor" in this disclosure may refer to any entity capable of processing data and/or signals. Illustratively, the processor may execute designated functions that process data and/or signals in a designated manner. A processor can encompass various forms, such as analog circuits, digital circuits, analog and digital circuits, logic circuits. A processor may include one or more of: microprocessors, Central Processing Units (CPUs), Graphics Processing Units (GPUs), Digital Signal Processors (DSPs), Field Programmable Gate Arrays (FPGAs), Application Specific Integrated Circuits (ASICs), as examples, or any combination thereof. Any other kind of implementation of the respective functions, some of which may have been described in this disclosure in further detail, may also be understood as a processor, controller, or logic circuit. It is further to be noted that a plurality of the processors, controllers, or logic circuits described herein may be referred to as a single entity with equivalent functionality or the like, and conversely that any single processor, controller, or logic circuit detailed herein may be realized as two (or more) separate entities with equivalent functionality or the like.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of signals, e.g., electrical currents) and logical transmission (e.g., the transmission of digital data over a logical software-level connection). For example, a processor or controller may transmit or receive data over a software-level connection with another processor or controller in the form of signals, where the physical transmission and reception are handled by signal-layer components such as transceivers, and the logical transmission and reception over the software-level connection is performed by the processors or controllers. The term "communicate" encompasses one or both transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. In various aspects, the communication may include the use of a designated communication protocol for the exchange of information.

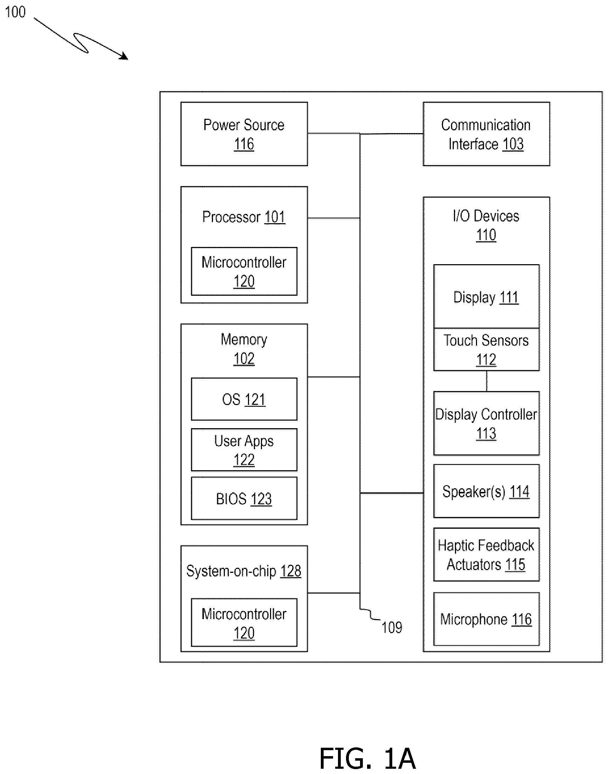

FIG.1A illustrates a computing device 100 in accordance with various aspects of this disclosure. The computing device 100 may refer to any contemporary electronic device including a computer, a laptop, a desktop, a tablet, a mobile phone, a smartphone, a personal digital assistant, an e-reader, a smartwatch, a wearable device, a gaming console, a smart home device, a TV streaming device, a virtual reality device, a medical device, an autonomous device such as a vehicle, a robot, a communication device, an automated teller machine, a self-checkout system, a point-of-sale (POS) terminal, a retail self-service kiosk, a vending machine, a checkout system, a banking terminal, a retail terminal, a self-service kiosk, a digital signage system, an interactive kiosk, a payment terminal, a ticketing kiosk, a wayfinding kiosk, and the like.

The computing device 100 may include a variety of features in the form of hardware components, software components, a hybrid of hardware and software, circuitry, etc. Some of those features may facilitate an interaction of the computing device 100 with a user. In various cases, one or more of the components may also interact with another component depicted in the computing device 100. Accordingly, some of the components may not be designated to interact with a user, but rather to interact with other components via a bus 109 to ensure a seamless functioning of the computing device 100. In other words, such components are communicatively coupled to the one or more features.

The computing device 100 may include a processor 101 in accordance with various aspects of the disclosure. The processor 101 may include one or more processing means. The processor 101 may include at least one of a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 101 may be implemented in one processing unit, e.g. a system on chip (SOC), or a processor. In some examples, the processor 101 may include one or more cores as computation units, an arithmetic logic, a control unit, a storage unit, a plurality of registers, etc. In some examples, the processor 101 may include more than one processors designated to perform various tasks. The processor 101 may be configured to execute machine-readable instructions (e.g. software). In accordance with various aspects described herein, the processor 101 may include a microcontroller 120.

The computing device 100 may further include a memory 102. In some examples, the processor 101 and the memory 102 may form a control device, or alternatively a portion of the control device as described herein. The processor 101 and the memory 102 may be communicatively coupled to each other via an internal interface. In accordance with various aspects described herein, the machine-readable instructions may be stored in the memory 102 couplable to the processor 101 or the processor 101 may access the content of the memory 102.

The computing device 100 may further include an operating system 121. For example, the memory 102 may store instructions of the operating system (OS) 121. The OS 121 may include instructions that may cause the processor 101 to manage and control hardware components of the computing device (e.g. the processor 101, the memory 102, the communication interface 103, the I/O devices 110) and their operations, to facilitate communication between different hardware components, and to enable execution of applications (e.g. user applications 122), which these operations may be provided by the processor 101 performing OS functions. The memory 102 may further include one or more user applications 122, which are configured for implementing various functions depending on the computing device 100 and designated functions of the computing device 100. The memory 102 may further include a Basic Input/output System (BIOS) 123 implemented by firmware and executable by the processor 101.

The computing device 100 may further include a communication interface 103. The communication interface 103 may be configured to transmit and/or receive communication signals from a communication medium according to one or more communication technologies to communicate with other communicable devices. The communication interface 103 may be configured to communicate with the other devices using wireless communication technologies (e.g. WLAN, cellular, Bluetooth, etc.) or wired communication technologies (e.g. USB, LAN, serial ports, etc.). The communication interface 103 may communicate with the other devices according to designated communication protocols.

The computing device 100 may include a power source 104 deployed as a battery and/or a power interface (e.g. including a transformer and AC/DC converter) to supply the necessary power to the computing device 100 from a power source. The processor 101 may be implemented as a single processor with one or more cores or a plurality of processors. The memory 102 and the processor 101 (some or all of the processor 101) may be located on the same printed circuit board (PCB) or the same die.

The computing device 100 may further include one or more input and output (I/O) devices 110 that are communicatively coupled to the internal interface and/or the communication interface 103. It is depicted in the illustrative example that the computing device 100 includes the I/O devices 110, however, this should not be taken as limiting, and the I/O devices 110 may be communicatively coupled to the computing device 100 via the communication interface 103 configured to communicate with the I/O devices 110 according to designated communication rules, syntax, etc. such as a designated communication protocol.

The I/O devices 110 may include various hardware and/or software components to provide input to the computing device 100, in particular in the form of information (e.g. instructions, messages, raw data, streams, etc.) for the processor 101 and/or the SoC 128 to process received input information to associate received input information for designated instructions. The I/O devices 110 may include input devices that are designated based on the use case of the computing device 100. In some examples, the I/O devices 110 may include one or more buttons (e.g. a keypad, a keyboard, buttons with designated functions, etc.). The provided input may include, for example, information representing an interaction of a user using the respective input device (e.g. information representing a pressed button of the keypad or keyboard). The I/O devices 110 may be configured to provide an output based on instructions executed by the processor 101 and/or the SoC 128. The I/O devices 110 may include output devices that are designated depending on the use case of the computing device 100. The provided output may include, in particular, an output to present various types of information or indications for a user. For example, a display may be one of the I/O devices 110 configured to display visual information to the user in the form of images, text, pictures, videos, etc.

It should be noted that an I/O device may be both an input device and an output device for the computing device 100 within this context. For example, one of the I/O devices 110 may include a display 111 configured to provide a visual output to a user. The display 111 may be a touch screen incorporating touch sensors 112 to detect electrical change responsive to touch by an electrically conductive element, fingers and stylus being common examples. Therefore, the display 111 may enable a user to interact with the information or data presented on the display 111. In other examples, the display 111 may be a capacitive screen leveraging capacitive switches for the user to tap, or a resistive screen responsive to pressure applied by the user on the display 111. For any kind of screen employed by the computing device 100, the touch sensors 112 may detect an electrical change (e.g. change in voltage) to identify an interaction with the display 111. Accordingly, such a display 111 including the touch sensors 112 may be both an example of an input device and an output device.

The I/O devices 110 may further include a display controller 113. In some examples, the processor 101 and the display controller 113 may operate to facilitate rendering of a content displayed on the display 111. Illustratively, the processor 101 may include a graphics processing unit (GPU) to control operation of the display 111 through use of the display controller 113. In other examples, a system-on-chip (SoC) 128 may be employed within the computing device 100 in order to implement the display controller 113. In certain aspects, separate integrated circuits (ICs) located on the same or different PCBs may carry the processor 101 and/or the SoC 128.

The I/O devices 110 may further include audio output devices such as one or more speakers 114. In some examples, the I/O devices 110 may include haptic feedback actuators 115. In some examples, the I/O devices 110 may include audio input devices such as one or more microphones 116. The processor 101 and/or the SoC 128 may implement an audio controller to provide an operation control of speaker(s) 114 and facilitate the rendering of the audio content. In some aspects, a standalone circuitry communicating with the processor 101 and/or the SoC 128 may implement the audio controller. Haptic feedback actuators 115 may be controlled by a haptic feedback controller. The processor 101 and/or the SoC 128 and/or a standalone circuitry may implement a haptic feedback controller.

In some examples, the computing device 100 may include a system-on-chip (SoC) configured to perform a designated function. In some examples, the SoC 128 may include a microcontroller 120.

Illustratively, the microcontroller 120 may be configured to perform a designated function defined by the main application firmware of the microcontroller. Illustratively, the microcontroller 120 may be configured as a controller to control any one or a combination of the components of the computing device 100 as described herein. In some examples, the microcontroller 120 may communicate with the processor 101 and/or any other components of the computing device 100 via its designated I/O interfaces (e.g. I/O peripherals).

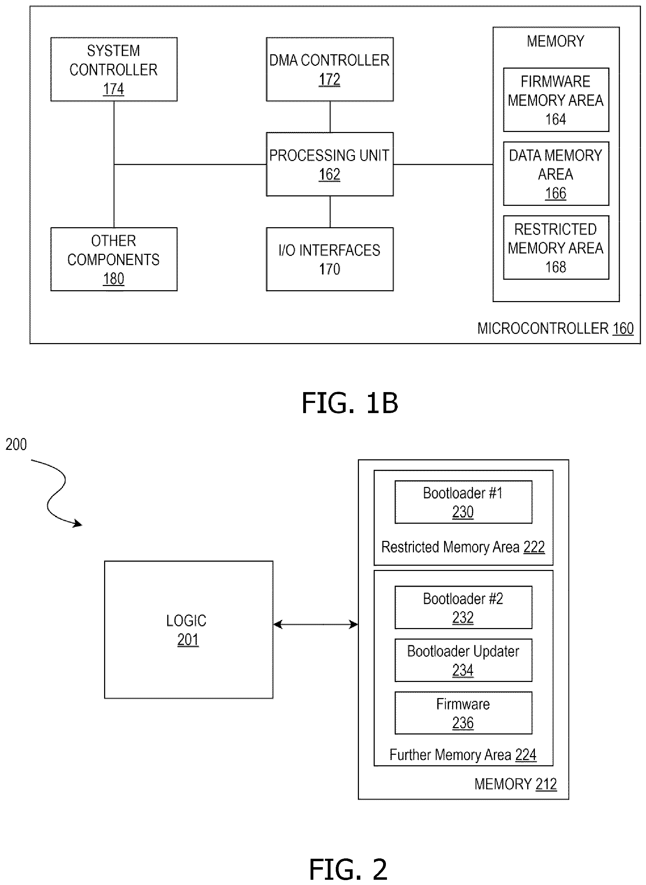

FIG. 1B shows an illustrative example of a microcontroller device in accordance with various aspects provided herein. Illustratively, the microcontroller 160 described herein in accordance with FIG. 1B may be the microprocessor 130 described in this disclosure. The microcontroller 160 comprises a processing unit 162 configured to serve as the main processor for executing instructions and controlling the overall operation of the microcontroller 160. The processing unit may include at least one of a Central Processing Unit (CPU), a Digital Signal Processor (DSP), a Graphics Processing Unit (GPU), a Cryptographic Coprocessor, an Artificial Intelligence (AI) Accelerator, or the like. : With the increasing adoption of AI and machine learning in embedded systems, some microcontrollers may include dedicated hardware accelerators for efficient execution of AI algorithms, such as neural network inference or matrix operations. In accordance with various aspects

The microcontroller 160 may further include a memory (e.g. a memory subsystem) including a firmware memory area 164, a data memory area 166, and a restricted memory area 168. The firmware memory area 164 may be configured to store the application firmware. It is to be noted that the firmware memory area 164 may store any type of application firmware, yet aspects are generally exemplified in this disclosure with a scenario in which the firmware memory area including the main application firmware or program code that the processing unit 162 may execute. In some examples, the firmware memory area 164 may be implemented using non-volatile memory technologies such as a flash memory or a read-only memory (ROM), configured to store the main application firmware or the program code. The firmware memory area 164 may include sectors or blocks, for efficient erasure and reprogramming of the firmware during updates or code modifications.

The data memory area 166 may be configured to store temporary data, variables, buffers, and other data (e.g. runtime data) required by the main application firmware, or sometimes by the bootloader software. The data memory area 166 may be implemented using volatile memory technologies such as static random access memory (RAM) or dynamic RAM (DRAM). Illustratively, the data memory area 166 may serve as a working space for the processing unit 162 during its operation that may include execution of the firmware stored in the firmware memory area 164, the bootloader software, and/or any other code execution by the processing unit 162. In some examples, the data memory area 166 may be faster than the firmware memory area 164, to enable efficient access and manipulation of data by the processing unit 162.

The restricted memory area 168, which is a dedicated memory region separate from the firmware memory area 164 and the data memory area 166, may be configured to store the bootloader software including instructions which, when executed by the processing unit 162, may cause the processing unit 162 to initialize the microcontroller 160, and to load the firmware (e.g. the main application firmware) from the firmware memory area 164 into the data memory area 166 during the boot process. In accordance with various aspects provided herein, the restricted memory area 168 may be implemented using non-volatile memory technologies, such as a dedicated flash memory region, a dedicated flash memory, or a specific section of the firmware memory area 164, and may be subject to access restrictions or protection mechanisms to ensure its integrity and security.

The microcontroller 160 may further include I/O interfaces 170. The processing unit 162 may, using the I/O interfaces, facilitate communication and interaction with external devices and peripherals (e.g. components of the computing device 100). Illustratively, the I/O interfaces 170 may include one or more digital I/O pins, one or more analog-to-digital converters (ADCs), one or more communication interfaces (e.g., UART, serial peripheral interface (SPI), Inter-Integrated Circuit (I2C), USB), timers, and other peripheral components specific to the target application. The I/O interfaces 170 may be coupled to the CPU processing unit 162, so that the processing unit 162 may control and interact with external devices and peripherals connected to the microcontroller.

In some examples, the microcontroller 160 may include a direct memory access (DMA) controller 172. The DMA controller 172 may facilitate data transfers between the memory (e.g. the data memory area 166) and peripheral devices directly (i.e. without direct involvement of the processing unit 162 for the transfer). The DMA controller 172 may be coupled to both the processing unit 162 and the memory, to facilitate the direct data transfers. Furthermore, the microcontroller 160 may include a system controller 174 configured to manage system resources, and/or handle interrupts, and/or coordinate the overall operation of various components of the microcontroller 160. Moreover, the microcontroller 160 may include other components, such as a real-time clock (RTC) configured to maintain time and date information, a watchdog timer to monitor the operation of the microcontroller and to reset the microcontroller in case of a software or hardware failure, a debugging interface to facilitate software development and debugging operations, and/or the like. The specific components and their interconnections within the microcontroller 160 may vary depending on the target application, performance requirements, and design constraints.

In the context of the memory of the microcontroller 160, a memory area may refer to a specific region or partition within the overall memory space, designated for storing particular types of data or code. The memory of the microcontroller 160 may include a number of memory areas, and as illustrated herein three primary memory areas: the firmware memory area 164, the data memory area 166, and the restricted memory area 168.

The memory areas 164, 166, 168 of the microcontroller 160 may be defined in various ways depending on the application requirements and the memory architecture of the microcontroller. For example, in the case of a single memory chip, the memory areas 164, 166, 168 may be defined by partitioning the available memory space into distinct regions using memory management techniques such as memory mapping or memory protection units (MPUs). For example, the firmware memory area 164, the data memory area 166, and the restricted memory area 168 may be allocated specific address ranges within the single memory chip, in accordance with designated access permissions and protection mechanisms applied to each region. In some examples, in the case of multiple memory chips, each one or more memory areas may be implemented via a corresponding memory device. For instance, the microcontroller 160 may include an external flash memory chip to store the firmware memory area 164 within, an SRAM or DRAM chip configured to store the data memory area 166, and a dedicated section of an internal flash memory of the microcontroller 160 may be configured to store the restricted memory area 168.

In accordance with various aspects described herein, the microcontroller 160 may include a logic that is configured to perform various operations provided herein. The logic may refer to any means that is configured to perform the described operations, in some examples as a combination of the hardware and the software. In some examples, the logic may include the processing unit 162, and particularly a specific portion of the processing unit 162 to perform the described operations. In some examples, the logic may be a separate processor (e.g. a processing unit) included by the microcontroller 160, which is different from the processing unit 162. In some examples, the logic may be referred to as "processor" within this disclosure.

In accordance with various aspects described herein, the microcontroller 160 may, upon provision of a power to the microcontroller 160, perform various operations between transitioning from a powered-off or sleep state into an operational state in which the processing unit 162 may execute the main application firmware. Illustratively, in response to the transitioning, a power-on-reset circuit may set the microcontroller 160 to start in a predefined state, for example, by resetting internal registers, initializing the system clock, etc. The operations may further include, in response to the above-described operation of the power-on-reset circuit, the processing unit 162 loading a program counter with an address of a reset vector, which may illustratively point to instructions to be executed at this stage. Traditionally, the reset vector may correspond to a predefined memory address within a predefined memory area, such as a start memory address of the restricted memory area 168 at which the bootloader software within the restricted memory area 168 begins.

Accordingly, in response to obtaining the reset vector, the processing unit 162 may fetch the bootloader software beginning at the start memory address and execute the bootloader software. This step may be referred to as "bootloader initialization" herein. The bootloader software may include instructions (i.e. bootloader instructions) that may cause the processing unit to initialize the hardware components, system clocks, memory controllers, I/O interfaces, etc. which may result in the components of the microcontroller 160 becoming operational. In some examples, the bootloader instructions may further cause the processing unit 162 to perform an integrity check on the main application software stored in the firmware memory area 164 to ensure that the main application firmware has not been corrupted or tampered with.

Further, the processing unit 162 may fetch the main application firmware and prepare it for the execution. In some examples, the processing unit 162 may load the main application firmware into the data memory area 166 (e.g. copy corresponding codes from the firmware memory area 164 into corresponding addresses of the data memory area 166). After preparing the main application firmware for the execution, the bootloader instructions may further cause the processing unit 162 to pass the control of the processing unit 162 to the main application firmware, illustratively by setting the program counter to the entry point of the code of the main application firmware. Correspondingly, the processing unit 162 may perform further initializations (e.g. initialization of further components, peripherals, etc.) using instructions of the main application firmware and the microcontroller 160 becomes fully operational executing the main application firmware.

FIG.2 shows an example of a microcontroller device in accordance with various aspects provided herein. The microcontroller device 200 may be the microcontroller 160 described in accordance with FIG. 1B, noting that FIG. 2 may illustrate the relationship only between a logic 201 and the memory of the microcontroller 160. The aspects described herein may provide a bootloader update mechanism, which may not be affected by aforementioned access restrictions and may allow delivering of a bootloader update without needing a further loader. Correspondingly, the microcontroller device 200 may provide means to enable and facilitate a bootloader update for embedded systems that may normally make use of a restricted memory section imposed by an existing firmware in order to keep an existing bootloader safe, and may prevent accidental penetration or malicious attempts to the restricted section (i.e. restricted area). Through aspects described herein, a seamless bootloader update may be provided without tampering with existing restrictions associated with the restricted section/area. Such restrictions may refer to a write restriction, effectively rendering the restricted memory section/area read-only.

The microcontroller device 200 may include a logic 201 configured to perform a variety of operations relating to process of a bootloader update. As described in accordance with FIG. 1B, a processor of the microcontroller (e.g. the processing unit 162) may implement the logic 201. The logic 201 may be communicatively coupled to a memory 212 (e.g. the memory described in accordance with FIG. 1B) within the microcontroller device 200. The memory 212 may include a non-volatile memory in any desired form, including but not limited to Programmable Read-Only Memory (PROM), Erasable Programmable Read-Only Memory (EPROM), Electrically Erasable Programmable Read-Only Memory (EEPROM), flash memory, ferroelectric Random Access Memory (FRAM), phase-change memory, and magneto resistive Random Access Memory (MRAM) to store instructions and/or programs related to initialization and/or functioning of the microcontroller device 200. In some examples, the memory 212 may further include volatile memory as well.

In some aspects, the memory 212 may include a first memory area and a second memory area. The first memory area may be a restricted memory area 222 (e.g. the restricted memory area 168) in the memory 212 may incorporate a first bootloader software 230 (e.g. Bootloader #1, a bootloader firmware). The first bootloader software 230 may include a bootloader software including instructions as an operational bootloader of the microcontroller. The processing unit (e.g. the processing unit 162) of the microcontroller 200 may be configured to use the bootloader stored in the restricted memory area 222 (i.e. the first bootloader software 230) to initialize the microcontroller device 200 or to update or modify the main application firmware (e.g. the firmware 236) associated with the microcontroller device 200. The memory 212 may include a second memory area designated within the memory 212. The second memory area may be a further memory area 224 (e.g. the firmware memory area 164) different from the restricted memory area 222.

In some examples, the further memory area 224 may refer to any other memory areas that is different from the restricted memory area 222 configured to storing the first loader 230 used to initialize the microcontroller 200. In some examples, the further memory area 224 may be configured to store an application firmware (e.g. firmware 236 that may be the main application firmware of the microcontroller 200). The firmware 236 may refer to a set of instructions that the processing unit of the microcontroller 200 may execute for the operation of the microcontroller device 200.

The further memory area 224 may include a bootloader updater 234 as a firmware application. The further memory area 224 may further include a second bootloader software 232. In some examples, the second bootloader software 232 may be a bootloader software that is different from the first bootloader software. In some examples, the second bootloader software may be considered as a backup bootloader software or a new bootloader software to be used to update the first bootloader software. The second bootloader software 232 may refer to an executable software that includes a binary image. In some examples, while the first bootloader software 230 may be contained within the restricted memory area 222, the second bootloader software 232 contained within the bootloader updater 234 may reside within the further memory area 224.

The further memory area 224, in some examples, may involve the firmware 236, bootloader updater 234, and the second bootloader software 232 as described, but this should not be taken as limiting with respect to the arrangement involving the second bootloader software 232, the bootloader updater, and the firmware 236. In some examples, the firmware 236 and the bootloader updater 234 may refer to a bundle software, each referring to a parts of the bundle software stored in the further memory area 224. In some examples, the firmware 236 and the second bootloader software 232 may refer to another bundle software, each referring to respective parts. In some examples, the second bootloader software 232 and the bootloader updater 234 may have been provided as a further bundle software, each referring to respective parts. In some examples, all of the second bootloader software 232, the bootloader updater 234 and the firmware 236 may have been provided as an all-bundle software. In some examples, the bootloader updater 234, or any one of the bundle software versions described above may be a software provided by a respective manufacturer or a trusted third party.

Illustratively, within the microcontroller, an update of a bootloader may include changing the instructions (i.e. the first bootloader software 230) stored within the restricted memory area 222, which the processing unit of the microcontroller 200 is configured to access for the bootloader initialization of the microcontroller 200. In some traditional examples, the first bootloader software may include update instructions, which the processing unit of the microcontroller 200 may execute to change the instructions stored within the restricted memory area 222.

In accordance with various aspects of the disclosure, the logic 201 may be configured to detect and/or identify a presence of a bootloader stored within the further memory area 224. Upon identification of the second bootloader software 232 (e.g. a bootloader that is different from the first bootloader software 230 stored within the restricted memory area 222), the logic 201 may execute the bootloader updater 234. In some examples, the bootloader updater 234 may include instructions that cause the logic 201 to overwrite the bootloader stored within the further memory area 224 into the restricted memory area 222. In other words, the bootloader updater 234 may cause the logic 201 to overwrite the second bootloader software 232 stored in the further memory area 224 onto the first bootloader software 230 stored in the restricted memory area 222. Accordingly, in case the logic 201 detects and/or identifies the presence of the second bootloader software 232, the logic 201 may execute the bootloader updater 234 that reads the second bootloader software 232 from the further memory area 224 and writes the read second bootloader software into the restricted memory area 222 (i.e. over the first bootloader software 230). In any example described herein, the logic 201 may execute the bootloader updater 234 before the execution of the first bootloader software 230 or the bootloader initialization, and the bootloader updater 234 may cause the logic 201 to overwrite the second bootloader software 232 into the restricted memory area 222 before the execution of the first bootloader software 230 or the bootloader initialization.

In some aspects, updating the first bootloader software 230 may refer to a overwriting process in which the second bootloader software 232 replaces the first bootloader software 230. In some examples, updating the first bootloader software 230 may refer to the logic 201 deleting the restricted memory area 222 and writing the second bootloader software 232 to the restricted memory area 222. In some examples, at least the start (i.e. the first) memory address by which the first bootloader software 230 begins and the start memory address by which the second bootloader software 232 begins are the same. As the first bootloader software 230 resides within the restricted memory area 222, the logic 201 may grant a write-access to the restricted memory area 222 to complete the update process. The write-access granted may include a temporary access and may be terminated after overwriting the second bootloader software 232 into the first bootloader software 230 such that the second bootloader software 232 becomes the operational bootloader of the microcontroller 200, and the first bootloader software 230 becomes obsolete. A duration for the temporary write-access may be preset and/or may be terminated after overwriting process. As indicated, in some examples, the second bootloader software 232 and the bootloader updater 234 may be provided as a bundle within the further memory area 224.

In some aspects, the logic 201 may identify the second bootloader software 232 within the further memory area 222 prior to the execution of the first bootloader software 230. In other words, the logic 201 may identify the second bootloader software 232 prior to the execution of the operational bootloader. Correspondingly, the initialization of the microcontroller device 200 may be postponed to a point in time at which the logic 201 may, at least, complete the detection and/or identification of the second bootloader software 232. In some examples, the logic 201 may not identify a bootloader within the further memory area 224. In such a case, the logic 201 may restart the microcontroller device 200 for initialization with the first bootloader software 230. If the logic 201 identifies the second bootloader software 232, the microcontroller device 200 may be restarted after overwriting the second bootloader software 232 into the first bootloader software 230. That process results in the microcontroller device 200 being initiated with the second bootloader software 232.

In accordance with various aspects described herein, the logic 201 may be configured to perform the operations described herein. Such a configuration may be provided by a dedicated logic included by the microcontroller 200. The dedicated logic may be initialized at least before the beginning of the bootloader initialization and the dedicated logic may be operational before the bootloader initialization step as illustratively described in accordance with FIG. 1B. Correspondingly, the dedicated logic may perform operations as described herein before the bootloader initialization.

In some aspects as described herein in which the logic 201 may be implemented by the processing unit of the microcontroller 200, instead of the reset vector pointing to the first bootloader software 230, the reset vector may point to a code stored in the further memory area 224, which the code includes instructions that may cause the processing unit of the microcontroller 200 to perform the operations described herein for the logic 201. Illustratively, the bootloader updater 234 may include the instructions that may cause the processing unit of the microcontroller to perform the operations described herein for the logic 201. This is to be taken as an example, and these instructions may be stored in any further portion of the further memory area 224 as well.

In some examples, instructions of the logic 201 described herein, either as a dedicated logic or as being implemented by the processing unit of the microcontroller, the bootloader updater 234 may be stored in a different type of memory than the firmware 236 and/or the second bootloader software. Illustratively, the microcontroller 200 may include a separate micro ROM bootloader module including its own dedicated memory to store the bootloader updater 234 and/or the instructions of the logic 201. The microcontroller 200 may be configured in a manner that the separate micro ROM bootloader module becomes operational before the bootloader initialization that loads the bootloader stored in the restricted memory area 222 to perform the operations of the logic 201 as described herein before the bootloader initialization.

In various aspects, the memory 212 may store a set of instructions (e.g. a portion of the bootloader updater 234) to enable the logic 201 to perform a search to identify the second bootloader software 232. The logic 201 may access those instructions and start the search prior to executing the first bootloader software 230. If the logic 201 is unable to locate the second bootloader software 232, the logic 201 may restart the microcontroller device 200 for initialization using the first bootloader software 230 or the logic 201 may cause the processing unit of the microcontroller 200 to begin (i.e. proceed with) to the bootloader initialization. The logic 201 may also perform a check on the first bootloader software 230 to detect a corruption within. In some aspects, checking the first bootloader software 230 may be performed before searching for the second bootloader software 232. The logic 201 may proceed with booting the microcontroller device 200 with the first bootloader software 230 as a result of not being able to identify the second bootloader software 232 and the first bootloader software 230 being uncorrupt.

In accordance with various aspects disclosed herein, the logic 201 may identify the second bootloader software 232 after performing the search in the presence of a detected corrupt first bootloader software 230. The logic 201 may instantiate the update procedure by executing the bootloader updater 234 and overwrites the second bootloader software 232 into the corrupt first bootloader software 230. The logic 201 may restart the microcontroller device 200 after completion of the update. Similarly, the logic 201 may cause the processing unit of the microcontroller 200 to begin (i.e. proceed with) the bootloader initialization after completion of the update. This process may allow the microcontroller device 200 to be initialized with a healthy bootloader and may mitigate the issue of being booted with a corrupt bootloader.

Even though the first bootloader software 230 is detected to be healthy (i.e. uncorrupt), the logic 201 may still identify/locate the second bootloader software 232. In such a case, it may be essential to assess whether to proceed with an update causing the second bootloader software 232 to replace the first bootloader software 230. To overcome this, the logic 201 may perform a comparison between the contents of the second bootloader software 232 and the first bootloader software 230. In some examples, the logic 201 may identify that the second bootloader software 232 and the first bootloader software 230 include the same content and therefore identical. The logic 201 may restart the microcontroller device 200, in this case, for initialization using the first bootloader software 230. Alternatively, the logic 201 may cause the processing unit of the microcontroller 200 to begin (i.e. proceed with) the bootloader initialization for initialization using the first bootloader software 230.

In other examples, the logic 201 may detect a different content included in the second bootloader software 232 in comparison with the content of the first bootloader software 230. In that case, the logic 201 may instantiate the update procedure by overwriting the second bootloader software 232 onto the first bootloader software 230 (i.e. into the restricted memory area 222). The logic 201 may restart the microcontroller device 200 after completion of the update, allowing the microcontroller device 200 to be initialized with the second bootloader software 232.. Alternatively, the logic 201 may cause the processing unit of the microcontroller 200 to begin (i.e. proceed with) the bootloader initialization for initialization using the second bootloader software 232 that is now stored in the restricted memory area 222.

There may be cases in which the first bootloader software 230 is corrupt and the second bootloader software 232 is not present within the further memory area 224. In such a case, the further memory area 224 may maintain storing of a bootloader image identical to the first bootloader software 230 in order to prevent the microcontroller device 200 to be initiated with a corrupt bootloader. The logic 201 may compare the corrupt and healthy bootloader and overwrite the healthy bootloader based on having a difference in order to mitigate the issue. Therefore, the identical bootloader replaces the second bootloader software 232, which is absent, in this scenario in which the identical bootloader is not to conduct a bootloader update but rather to avoid booting the microcontroller device 200 with a corrupt bootloader software.

On the other hand, the process may remain similar to what is described for the presence of the second bootloader software 232, only difference being the identical bootloader software may be incapable of providing a conventional bootloader update. Consequently, while the first bootloader software 230 may refer to a first bootloader software stored in the restricted memory area 222, the second bootloader software 232 may refer to a second bootloader software different from or identical to the first bootloader software 230 depending on implementation. The implementation herein may refer to a bootloader update, facilitating the boot process in the presence of a corrupt bootloader, or a combination of both processes.

As denoted, a temporary write access may be required for the second bootloader software 232 to be overwritten. In order to enable a temporary write access, the logic 201 may perform a code checking on the second bootloader software 232. The code checking may involve a signature check to identify whether the second bootloader software 232 is provided by the manufacturer or a trusted third party. Additionally, or alternatively, the logic 201 may perform a code checking on the bootloader updater 234 in order to ensure the authentication of the second bootloader software 232. A further code checking on the bootloader updater 234 may enhance the security by ensuring that the second bootloader software 232 is genuine. Such a process may prevent a fraudulent and/or malicious attempt intending to replace the first bootloader software 230 with a malicious software. Additionally, or alternatively, the code checking may include a bit-wise check on the binary image of the second bootloader software 232.

In certain aspects, the logic 201 may be configured to grant the temporary write access responsive to a received password. The password may be provided by the manufacturer or a trusted third party to a user of the microcontroller device 200. The user may utilize I//O devices designated to allow the user to interact with the microcontroller device 200. The user may make use of a peripheral device such as a keypad or a keyboard to provide the password in order to initialize the bootloader update process. The logic 201 may receive the password and check whether the received password is correct to execute the bootloader updater 234. An incorrect password may lead to a process in which the logic 201 does not grant the temporary write-access to the restricted memory area 222. In that case, the microcontroller device 200 may be booted using the first bootloader software 230. In some examples, the password may be embedded in the bootloader updater 234 or the second bootloader software 232. In such a case, the logic 201 may detect the embedded password and accordingly grant the temporary write-access.

Alternatively, the temporary write access to the restricted memory area 222 may be granted based on a response received as a result of a challenge presented. The logic 201 may execute the bootloader updater 234 based on a response to the challenge. In other examples, the logic 201 may grant the temporary write-access based on a cryptographic verification. The examples concerning how the temporary write-access is granted are nonlimiting and any other suitable method may be implemented to achieve a similar effect.

In some aspects, the microcontroller device 200 may become inoperable as a result of power-loss during the bootloader update process. In order to avoid cases in which a power-loss is experienced to result in inoperability, the microcontroller device 200 may provide a way to complete the update. In some examples, the microcontroller device 200 may employ/include capacitors to store an amount of energy adequate at least to complete a certain stage of the process that affect non-volatile memory 212 (e.g. overwriting). Such a workaround may prevent the microcontroller device 200 from losing its operability may hold the microcontroller device 200 under a stable condition during at least a part of the update process until normal state is achieved (e.g. by restoring/resupplying power).

The way the components and/or software depicted are for illustrative purposes. In an example, the bootloader updater 234 involving the second bootloader software 232 may be a firmware application or a firmware, such that the firmware 236 may include the second bootloader software 232. For instance, the firmware 236 may include code to load the second bootloader software 232 to the further memory area 224.

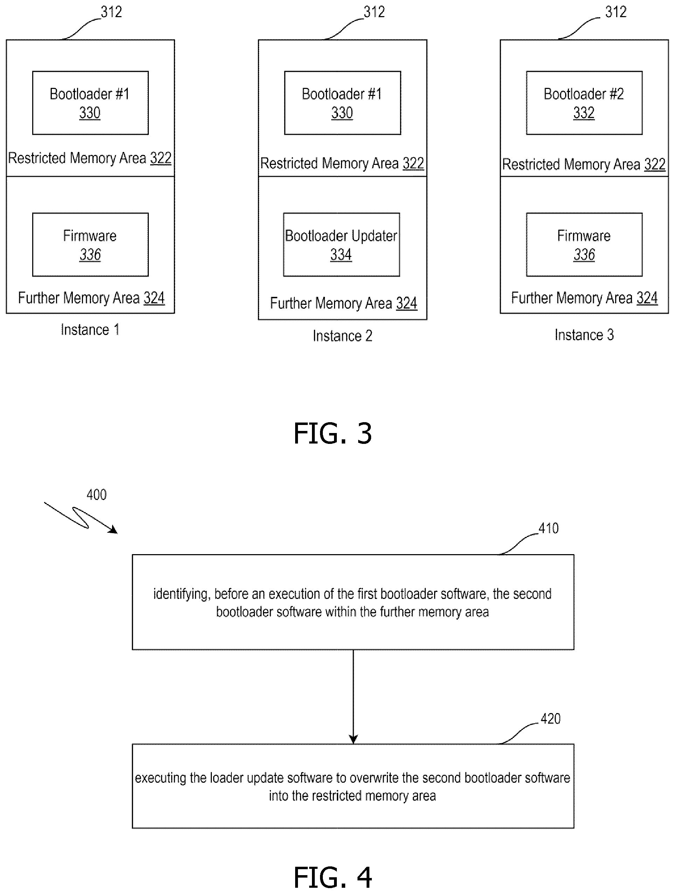

FIG. 3 shows an illustrative example of a memory 312 (e.g. memory 212) in three- time instances in accordance with various aspects described herein. The memory 312 may be a non-volatile memory including a first area referred to as a restricted memory area 322 (e.g. restricted memory area 222) and a further memory area 324 (e.g. further memory area 224). The restricted memory area 322 and the further memory area 324 may be configured for storing respective software components similarly as shown in FIG. 2 and/or in accordance with one or more examples given for the memory 312 (i.e. memory 212) . Components, structures or operations accompanying FIG.3 may be associated with the corresponding counterparts accompanying FIG. 2.

The first instance may represent an instance of time in which the further memory area 324 does not include a bootloader updater as described herein. The further memory area 324 may include the firmware 336 (e.g. the main application firmware) which the processing unit of the microcontroller 200 may execute in operational mode. Illustratively, the first instance may represent a default operation mode of the microcontroller. In this case, the logic 201 may be unable to identify a bootloader within the further memory area 324. Therefore, the microcontroller device 200 may be initialized or booted as expected by loading first the bootloader 330 stored within the restricted memory area 322 and then the firmware 336 to become operational.

The second instance may represent an instance of time in which the further memory area 324 includes a bootloader updater 324 (e.g. the bootloader updater 224). In other words, the second instance may represent an instance of time in which the microcontroller 200 may be configured for an update or for a repair procedure associated with rewriting of the bootloader 330. In some examples, the bootloader updater 324 may be provided as a firmware application, such that it becomes stored in the further memory area 334. In some examples, the bootloader updater 324 may be stored together with the firmware 336. In some examples, the further memory area 324 may not store the firmware 336 at the second instance but may store only the bootloader updater including a further bootloader software. In some examples, the further bootloader software may include a binary image that may be written into the restricted memory area 322.

Through an initialization of the microcontroller 200, the logic 201 (e.g. the processing unit of the microcontroller 200) may check the further memory area 324 to identify a presence of the bootloader updater 334. In some examples, the logic 201 may initiate a code that may cause the logic 201 to setup the stack pointer, initialize block starting segments and configure basic hardware settings to access into the further memory area 324 (e.g. accessing predefined memory addresses) before the initialization of the bootloader 330. The logic 201 may access the memory location where the bootloader updater 324 is stored. For example, the logic 201 may identify the presence of the bootloader updater 324 and/or the further bootloader software by reading a header or metadata (e.g. designated memory addresses that stores the header or metadata) associated with the bootloader updater 324 and/or the further bootloader software.

In some examples, the logic 201 may compare the binary image stored as the further loader software within the further memory area 324 with a binary image of the bootloader 330 stored in the restricted memory area 322. Illustratively, the logic 201 may read at least a portion of the binary image stored in the further memory 324 and may calculate a value (e.g. a checksum) based on the read. The logic 201 may compare the calculated value with a calculated value for the binary image stored in the restricted memory area 324. The logic 201 may calculate the value for the binary image stored in the restricted memory area 324 in real-time, or the logic 201 may access to the part of the memory 312 that stores a previously calculated value. Correspondingly, the logic 201 may determine whether the binary image stored in the restricted memory area 322 and the binary image stored in the further memory area 324 have a difference. Illustratively, the logic 201 may identify the further bootloader software and perform a comparison between the contents of the existing bootloader software provided as the bootloader 330 and the further bootloader software. If the further bootloader software contains one or more dissimilarities/differences, the logic 201 may execute the bootloader updater 334 for overwriting the further bootloader software onto the bootloader 330.

Based on the above-mentioned identification and/or comparison, the logic 201 may determine whether to perform an update or not. Illustratively, the logic 201 may update the bootloader 330 stored in the restricted memory area 322 if the logic 201 identifies the presence of the bootloader updater 324 and/or the further bootloader software. The logic 201 may update the bootloader stored in the restricted memory area 322 if the binary image stored in the restricted memory area 322 and the binary image stored in the further memory area 324 have a difference (i.e. if they are different binary images).

The third instance may represent an instance of time in which the bootloader of the microcontroller 200 has been updated in accordance with the first and the second instances. At the third instance, the microcontroller 200 may operate with a new bootloader 332 including the further bootloader software. In some examples, for example when the further memory area 324 did not store the firmware 336, the further bootloader software may cause the processing unit of the microcontroller 200 to rewrite the firmware 336 into the further memory area 324. Illustratively, during the first bootloader initialization after the new bootloader 332 being stored in the restricted memory area 322, the new bootloader 332 may cause the processing unit of the microcontroller 200 to fetch the firmware 336 from a known location (e.g. another memory, via designated peripherals, etc.) and to store the fetched firmware 336 into the further memory area 324, which may include overwriting the firmware 336 onto the bootloader updater 334.

FIG. 4 illustrates a method 400 in accordance with various aspects disclosed herein. The method 400 includes operations associated with the logic 201 to carry out the bootloader update process. At block 410, the method 400 includes identifying, before an execution of the first bootloader software 230, the second bootloader software 232 within the further memory area 224. At block 420, the method 400 includes executing 420 the bootloader updater 234 to overwrite the second bootloader software 232 into the restricted memory area 222. The method 400 may further include any one of aspects described herein. A non-transitory computer-readable medium may include instructions which, if executed by a processor, cause the processor to perform the method 400.

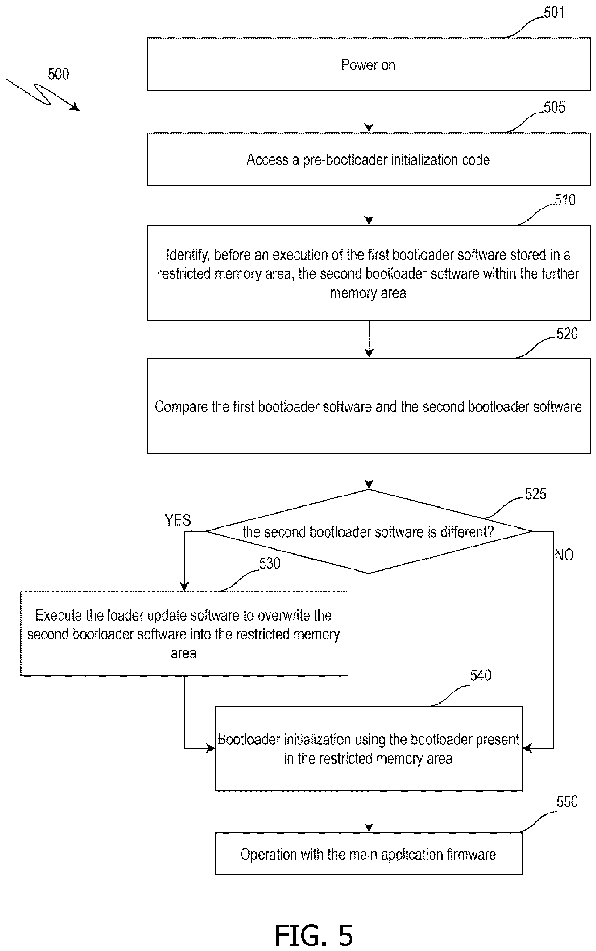

FIG.5 depicts a flow diagram 500 in accordance with various aspects disclosed herein. In some examples, the processing unit of the microcontroller 200 (e.g. the processing unit 162) may perform the operations described herein by performing each block. In some examples, the processing unit and a logic (e.g. the logic) may perform the operations. The described operation may represent various steps within an initialization of a microcontroller device from powering on of the microcontroller to the microcontroller becoming operational to execute instructions of the main application firmware of the microcontroller.

At block 501, "Power on" is the initial phase in the microcontroller's startup sequence. When power is applied to the microcontroller, the Power-On Reset (POR) circuit may ensure that the microcontroller starts in a known state. This may include resetting all internal registers, initializing the system clock, and stabilizing the power supply voltage. The POR may hold the microcontroller in a reset state until the power supply voltage stabilizes and the internal clock is ready. Once these conditions are met, the processing unit of the microcontroller exits the reset state and begins executing instructions from the reset vector, which points to a startup code.

At block 505, the processing unit accesses a pre-bootloader initialization code that is to be executed before the bootloader initialization. With the execution of the pre-bootloader initialization code, the processing unit may read specific memory locations and may fetch the pre-bootloader initialization code for execution. The pre-bootloader initialization code may cause the processing unit to perform the aspects described in blocks 510, 520, 525, 530, and 540.

At block 510, the processing unit may identify, before the execution of the bootloader stored in a designated location at the restricted memory area, which is configured to provide bootloader initialization functions, the processing unit may identify a further bootloader software stored within a memory area different from the restricted memory area (e.g. further memory area). For example, the processing unit may access the further memory area. The processing unit may perform any code checking operations to identify the further bootloader software. In some examples, the processing unit may access to predefined locations within the further memory area and if the predefined locations include a binary image, the processing unit may have identified the presence of the further bootloader software. Illustratively, the further bootloader software may be within a designated address range.

At block 520, the processing unit may compare the bootloader software identified within the further memory area with the bootloader software stored in the restricted memory area. The processing unit may or may not detect differences differentiating the second bootloader stored in the further memory area from the first bootloader software stored in the restricted memory area., both software may be provided as respective binary images and the processing unit may compare two binary image with any known method to determine, at block 525, whether they are the same binary images or different binary images.

If the processing unit determines that the first bootloader software and the second bootloader software are the same bootloader software, at block 525, the processing unit may initiate, at block 540, the bootloader initialization using the bootloader present in the restricted memory area, which is the first bootloader software in this constellation. If the processing unit determines that the first bootloader software and the second bootloader software are not the same bootloader software (i.e. different bootloader software), the processing unit may, at block 530, execute the loader update software (e.g. the bootloader updater 234), which may cause the processing unit to write the second bootloader software into the restricted memory area. The processing unit may overwrite the second bootloader software onto the first bootloader software, or delete the first bootloader software first and then write the second bootloader software, which may illustratively start at the same memory address that the first bootloader software had started before the deletion. Then, the processing unit may initiate, at block 540, the bootloader initialization using the bootloader present in the restricted memory area, which is the second bootloader software in this constellation. At block 550, the executed bootloader may complete the bootloader initialization and load the main application firmware and pass the control to the main application firmware.

In the following, various examples are provided with reference to the aspects described above.

In example 1, the subject matter includes a microcontroller device including: a non-volatile memory including: a restricted memory area configured to store a first bootloader software to load a firmware; a further memory area configured to store a loader update software and a second bootloader software; a logic configured to: identify, before an execution of the first bootloader software, the second bootloader software within the further memory area; and execute the loader update software to overwrite the second bootloader software into the restricted memory area.

In example 2, the subject matter of example 1, wherein the logic is configured to identify the second bootloader software responsive to a detection of a corruption of the first bootloader software.

In example 3, the subject matter of example 1 or example 2, wherein the logic is configured to execute the loader update software to overwrite the second bootloader software before the execution of the first bootloader software.

In example 4, the subject matter of any one of examples 1 to 3, wherein the second bootloader software includes a binary image of a bootloader software.

In example 5, the subject matter of any one of examples 1 to 4, wherein the logic is further configured to compare the first bootloader software and the second bootloader software; and execute the loader update software to overwrite the second bootloader software if the first bootloader software and the second bootloader software have a difference.

In example 6, the subject matter of any one of examples 1 to 5, wherein the logic is further configured to compare the first bootloader software and the second bootloader software; and wherein the logic is further configured to cause the first bootloader software to be executed if the first bootloader software and the second bootloader software are identical.

In example 7, the subject matter of any one of examples 1 to 6, wherein the non-volatile memory includes a read only memory or a further restricted memory area configured to store instructions configured to cause the logic to identify the second bootloader software and/or execute the loader update software to overwrite the second bootloader software.

In example 8, the subject matter of any one of examples 1 to 7, wherein the logic is further configured to perform a search, before the execution of the first bootloader software, the further memory area to identify an application firmware image including the second bootloader software within the further memory area.

In example 9, the subject matter of any one of examples 1 to 8, wherein the restricted memory area is prevented for a write access; wherein the logic is configured to grant a temporary write access to the restricted memory area.

In example 10, the subject matter of claim 9, wherein the logic is configured to grant the temporary write access based on a code checking of the loader update software.

In example 11, the subject matter of claim 9 or example 10, wherein the logic is configured to prevent the write access of the restricted memory area after an overwriting of the second bootloader software into the restricted memory area.

In example 12, the subject matter of any one of claims 1 to 11, wherein the second bootloader software includes further first instructions configured to cause the logic to identify a further bootloader software stored in the further memory area and further second instructions configured to load the firmware or a further firmware.

In example 13, the subject matter of any one of claims 1 to 12, wherein the further memory area is further configured to store the firmware.

In example 14, the subject matter includes a method for a microcontroller device, the method including: identifying, before an execution of a first bootloader software stored in a restricted memory area, a second bootloader software within a further memory area; executing a loader update software stored in the further memory area to overwrite the second bootloader software into the restricted memory area.

In example 15, the subject matter of example 14, may further include: detecting a corruption of the first bootloader software stored in the restricted memory area; and identifying the second bootloader software responsive to the detection of the corruption of the first bootloader software.

In example 16, the subject matter of example 14 or example 15, may further include executing the loader update software to overwrite the second bootloader software before the execution of the first bootloader software.

In example 17, the subject matter of any one of examples 14 to 16, wherein the second bootloader software includes a binary image of a bootloader software.

In example 18, the subject matter of any one of examples 14 to 17, may further include: comparing the first bootloader software and the second bootloader software; and executing the loader update software to overwrite the second bootloader software if the first bootloader software and the second bootloader software have a difference.

In example 19, the subject matter of any one of examples 14 to 18, may further include: comparing the first bootloader software and the second bootloader software; and causing the first bootloader software to be executed if the first bootloader software and the second bootloader software are identical.

In example 20, the subject matter of any one of examples 14 to 19, may further include performing a search, before the execution of the first bootloader software, the further memory area to identify a bootloader image within the further memory area.

In example 21, the subject matter of any one of examples 14 to 20, may further include granting a temporary write access to the restricted memory area, which has been prevented for a write access.

In example 22, the subject matter of example 21, may further include granting the temporary write access based on a code checking of the loader update software.

In example 23, the subject matter of example 21 or example 22, may further include preventing the write access of the restricted memory area after an overwriting of the second bootloader software into the restricted memory area.

In example 24, the subject matter of any one of examples 14 to 23, wherein the second bootloader software includes further first instructions configured to cause the logic to identify a further bootloader software stored in the further memory area and further second instructions configured to load the firmware or a further firmware.

In example 25, a non-transitory computer-readable medium including one or more instructions which, if executed by a logic of a microcontroller device, cause the logic to perform the method of any one of examples 14 to 24. While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A microcontroller device comprising:
a non-volatile memory comprising:
a restricted memory area configured to store a first bootloader software to load a firmware; and
a further memory area configured to store a loader update software and a second bootloader software;
a logic configured to:
identify, before an execution of the first bootloader software, the second bootloader software within the further memory area; and
execute the loader update software to overwrite the second bootloader software into the restricted memory area.

2. The microcontroller device of claim 1,
wherein the logic is configured to identify the second bootloader software responsive to a detection of a corruption of the first bootloader software.

3. The microcontroller device of claim 1 or claim 2,
wherein the logic is configured to execute the loader update software to overwrite the second bootloader software before the execution of the first bootloader software.

4. The microcontroller device of any one of claims 1 to 3,
wherein the second bootloader software comprises a binary image of a bootloader software.

5. The microcontroller device of any one of claims 1 to 4,
wherein the logic is further configured to compare the first bootloader software and the second bootloader software; and
execute the loader update software to overwrite the second bootloader software if the first bootloader software and the second bootloader software have a difference.

6. The microcontroller device of any one of claims 1 to 5,
wherein the logic is further configured to compare the first bootloader software and the second bootloader software; and
wherein the logic is further configured to cause the first bootloader software to be executed if the first bootloader software and the second bootloader software are identical.

7. The microcontroller device of any one of claims 1 to 6,
wherein the non-volatile memory comprises a read only memory or a further restricted memory area configured to store instructions configured to cause the logic to identify the second bootloader software and/or execute the loader update software to overwrite the second bootloader software.

8. The microcontroller device of any one of claims 1 to 7,
wherein the logic is further configured to perform a search, before the execution of the first bootloader software, the further memory area to identify an application firmware image comprising the second bootloader software within the further memory area.

9. The microcontroller device of any one of claims 1 to 8,
wherein the restricted memory area is prevented for a write access;
wherein the logic is configured to grant a temporary write access to the restricted memory area.

10. The microcontroller device of claim 9,
wherein the logic is configured to grant the temporary write access based on a code checking of the loader update software.

11. The microcontroller device of claim 9 or claim 10,
wherein the logic is configured to prevent the write access of the restricted memory area after an overwriting of the second bootloader software into the restricted memory area.

12. The microcontroller device of any one of claims 1 to 11,
wherein the second bootloader software comprises further first instructions configured to cause the logic to identify a further bootloader software stored in the further memory area and further second instructions configured to load the firmware or a further firmware.

13. The microcontroller device of any one of claims 1 to 12,
wherein the further memory area is further configured to store the firmware.

14. A method for a microcontroller device, the method comprising:
identifying, before an execution of a first bootloader software stored in a restricted memory area, a second bootloader software within a further memory area;
executing a loader update software stored in the further memory area to overwrite the second bootloader software into the restricted memory area.

15. A computer-readable medium comprising one or more instructions which, if executed by a logic of a microcontroller device, cause the logic to perform the method of claim 14.
